# FASCICULE DE BREVET EUROPEEN

(11) **EP 2 729 996 B1**
(45) Date de publication et mention de la délivrance du brevet: **27.04.2022**
(21) Numéro de dépôt: 12743492.6
(22) Date de dépôt: 03.07.2012
(51) Int. Cl.: H01R 13/66, H01R 31/00, H04L 25/02, H04L 12/40, H01R 24/54

(54) **PORTION DE CABLE ET EQUIPEMENT DE COMMUNICATION POUR RACCORDER DES LIGNES ABONNEES A UNE LIGNE DE BUS DE DONNEES**
KABELTEIL UND KOMMUNIKATIONSGERÄT ZUR VERBINDUNG VON TEILNEHMERLEITUNGEN MIT EINER DATENBUSLEITUNG
CABLE PORTION AND COMMUNICATION EQUIPMENT FOR LINKING SUBSCRIBER LINES TO A DATABUS LINE

(30) Priorité: 04.07.2011 FR 1156014
(43) Date de publication de la demande: 14.05.2014
(73) Titulaire: AXON CABLE, 51210 Montmirail (FR)
(72) Inventeur: ROUCHAUD, Gilles, F-51210 Montmirail (FR); COFFINET, Christophe, F-02440 Conde en Brie (FR)
(74) Mandataire: Cabinet Beau de Loménie
(86) Numéro de dépôt international: PCT/FR2012/051537
(87) Numéro de publication internationale: WO 2013/004963

(56) Documents cités:
- EP-A1- 2 309 607
- EP-A2- 0 241 738
- FR-A1- 2 261 667
- US-A- 5 702 261
- US-A- 5 906 513
- US-A1- 2006 278 794
- US-B1- 6 314 481

## Description

L'invention concerne un équipement de raccordement comportant un dispositif de couplage pour ligne de bus de données, en particulier pour une ligne conforme aux exigences de la norme américaine MIL-STD-1553B.

La norme MIL-STD-1553B est une norme écrite pour des applications militaires, qui définit les caractéristiques électriques et fonctionnelles d'un réseau de bus de données en série, devant permettre le transfert d'information entre des équipements d'un véhicule. Cette norme a été conçue à l'origine pour des usages militaires et notamment avioniques militaires, mais elle est aussi utilisée communément dans le domaine spatial et depuis peu dans l'aéronautique civile du fait de sa grande fiabilité.

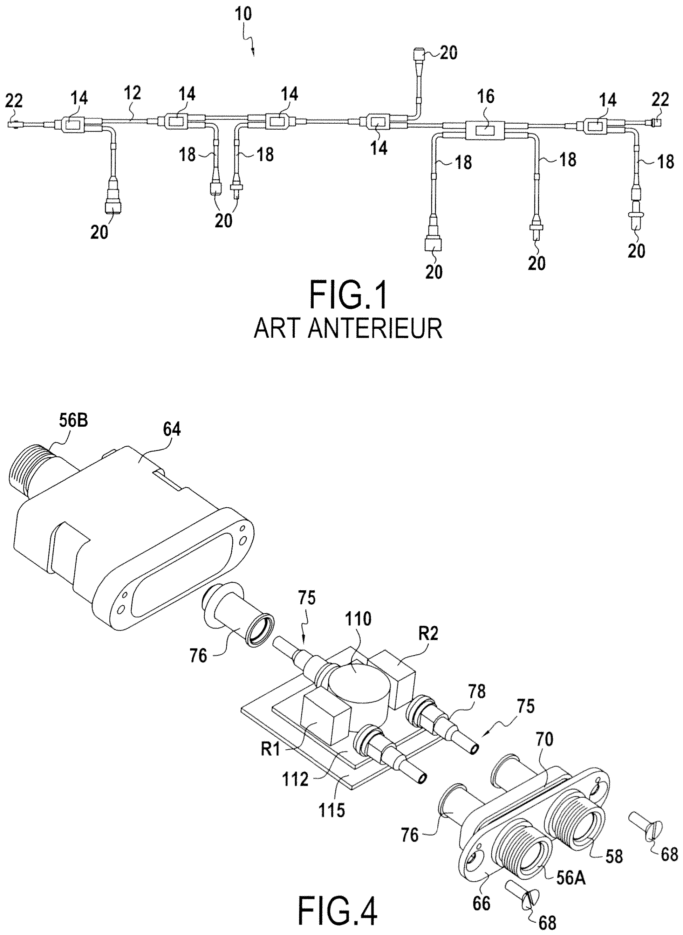

La figure 1 représente un mode de réalisation connu d'un réseau de bus de données 10 conforme à la norme MIL-STD-1553B. Cette ligne de bus de données est prévue pour être intégrée à un faisceau de câbles ou harnais équipant un véhicule tel qu'un avion, un satellite, etc.

Le réseau de bus de données 10 répondant à cette norme se caractérise par une ligne principale 12 ou ligne de bus de données généralement redondante, dans laquelle circule le flux de données, et sur laquelle sont raccordées par le biais de dispositifs de couplage 14 et 16 des lignes 18 dites stubs ou lignes abonnées.

Dans ce document, on désigne par 'ligne' tout fil ou câble apte à convoyer au moins un signal ; par 'partie d'une ligne de bus de données', une partie de ligne apte à faire partie d'une ligne de bus de données ; par 'partie de ligne abonnée', une partie de ligne apte à faire partie d'une ligne abonnée reliant un équipement à une ligne de bus de données.

Dans le réseau 10, les lignes abonnées 18 relient à la ligne de bus de données 12 des équipements (non représentés) devant communiquer, qui sont reliés à ces lignes abonnées par des connecteurs d'extrémité 20. La ligne principale 12 se termine par deux impédances terminales de ligne 22, positionnées à chaque extrémité de la ligne 12. Dans l'exemple de la figure 1, les coupleurs permettent soit le raccordement d'une seule ligne abonnée (dispositifs de couplage 14), soit le raccordement de deux lignes abonnées (le dispositif de couplage 16 montrant le couplage de 2 lignes abonnées).

La ligne principale et les lignes abonnées sont des paires blindées torsadées adaptées à une impédance de 77 Ohms.

Dans ce réseau, les différentes parties de la ligne de bus de données 12 sont fixées de manière permanente aux dispositifs de couplage 14,16. De même, les lignes abonnées 18 sont fixées de manière permanentes aux dispositifs de couplage 14,16. L'ensemble illustré sur la figure 1 est donc un harnais complet, monté en usine, qui ne peut ni être démonté ni être réagencé en fonction de circonstances imprévues survenant lors du montage sur le véhicule. Aucune modification ne peut être apportée par les opérateurs en charge du montage. Aussi, cette solution peut se révéler lourde voir très lourde en cas de maintenance, de changement de topologie (d'architecture) du réseau de bus de données, par exemple lorsqu'il est nécessaire d'ajouter un dispositif de couplage suite à l'incorporation d'un nouvel équipement ou tout simplement suite à un souci d'intégration (câble ou dispositif de couplage endommagé durant l'installation dans le véhicule). De plus, pour spécifier et faire fabriquer ce type de harnais, l'agencement et la géométrie du véhicule doivent être parfaitement connus (emplacement des dispositifs de couplage, longueurs des lignes), ce qui est très contraignant sur le plan industriel.

Enfin, le harnais doit être complet dès sa fabrication en usine, ce qui fait qu'il est généralement très encombrant et peu maniable.

Une autre solution connue pour réaliser un réseau de bus de données conforme à la norme MIL-STD-1553B consiste à utiliser un coupleur agencé dans un boîtier de raccordement. On parle alors d'un coupleur-boîtier. Sur une face de ce boîtier sont fixés des connecteurs qui permettent le raccordement de la ligne de bus de données et de la ou des ligne(s) abonnée(s). Le boîtier de raccordement, qui est relativement lourd, est fixé généralement à l'aide de vis sur la structure dans lequel le réseau de bus de données est installé, en général à bord d'un véhicule. La fixation par vis est une fixation éprouvée, connue pour être fiable malgré les sollicitations (accélérations, vibrations, chocs) pouvant survenir dans le véhicule.

Grâce aux coupleurs-boîtiers, le réseau de bus de données avantageusement peut être monté progressivement, de manière modulaire. Il est possible d'acheter les coupleurs et des connecteurs d'interface comme des éléments standard « sur étagère », et de faire constituer les lignes abonnées par un atelier de câblage. Ainsi les lignes abonnées sont adaptées à l'application pour laquelle elles sont réalisées, et peuvent être modifiées à tout moment. Cette solution offre une possibilité de maintenance aisée.

Cependant, à cause de la masse des coupleurs, la masse du réseau de bus de données ainsi réalisé est importante et notamment bien plus importante que dans le mode de réalisation précédent. D'autre part, les coupleurs se fixent dans la structure du véhicule, ce qui la fragilise. De plus, les trous de fixation dans la structure doivent faire l'objet d'études, et doivent en général être validés dès la conception du véhicule, ce qui représente une contrainte industrielle importante. Enfin, la topologie du réseau bus doit être connue dès le démarrage du projet, ce qui est très rarement le cas.

Une troisième solution connue est celle divulguée par le brevet EP0241738. Ce brevet divulgue un dispositif de couplage pour réseau de bus de données conforme à la norme MIL-STD-1553B. Ce dispositif de couplage comporte un boîtier en deux parties, à savoir une partie avant en forme de manchon et une chambre. La partie avant comporte une bride, au moyen de laquelle le coupleur est fixé dans une armoire électrique ; l'armoire électrique étant fixée sur la structure du véhicule.

Du fait de l'encombrement et du poids de l'armoire électrique, le nombre d'armoires électriques équipant le véhicule est limité. Ce mode de réalisation conduit donc à avoir une distance relativement grande entre les équipements à raccorder au bus de données et leurs points de raccordement sur celui-ci, dans les armoires électriques. Il en résulte une moindre qualité du signal transmis, un poids élevé du réseau de bus de données, un besoin de fixer les armoires électriques contenant les boîtiers de raccordement.

Aussi, un premier objectif de l'invention est de remédier aux inconvénients des dispositifs précédents et de proposer un équipement de raccordement pour ligne de bus de données, agencé de telle sorte que la ligne de bus de données puisse s'intégrer dans le réseau de bus de données de manière modulaire, en permettant par exemple de changer la ou les lignes abonnées, de changer ou d'ajouter un dispositif de couplage, etc.

Un second objectif de l'invention est que l'équipement de raccordement, malgré les possibilités indiquées ci-dessus de changement des lignes abonnées, présente une masse relativement faible et notamment moins importante que les éléments équivalents (notamment comprenant des coupleurs-boîtiers) existants.

Un troisième objectif est que l'équipement de raccordement ne nécessite pas une fixation portant atteinte à la structure du véhicule dans lequel le réseau de bus de données est monté.

Un quatrième objectif est que l'équipement de raccordement puisse être implanté dans une structure, notamment de véhicule, sans nécessiter ni étude de faisabilité ni modification de la structure dans lequel le réseau de bus de données doit être implanté.

Ces objectifs sont atteints par le fait que l'équipement de raccordement consiste en une portion de câble comprenant :
- deux parties d'une ligne de bus de données ;
- au moins une partie de ligne abonnée ;
- un dispositif de couplage auquel sont raccordées lesdites parties de ligne de bus de données et de ligne(s) abonnée(s) ;
   la ligne de bus de données et ladite au moins une ligne abonnée comprenant chacune une paire de conducteurs torsadés, protégés par un blindage ;
   le dispositif de couplage comprenant :
      - dans un boîtier conducteur, un coupleur assurant la transmission de données entre les deux parties de la ligne de bus de données, ainsi qu'entre la ligne de bus de données et ladite au moins une ligne abonnée ;
      - des connecteurs, solidaires du boîtier, permettant le raccordement réversible sur celui-ci des deux parties de ladite ligne de bus de données et de ladite au moins une ligne abonnée ;
   le boîtier étant électriquement relié aux blindages desdites deux parties et de ladite au moins une ligne abonnée ; de l'extérieur vers l'intérieur suivant une direction radiale, chacun des connecteurs comportant un manchon cylindrique formé intégralement avec le boîtier conducteur, un isolant externe en forme de manchon, et un contact coaxial ; le contact coaxial étant constitué par un manchon sensiblement cylindrique conducteur, un manchon cylindrique isolant interne, et à l'intérieur, une tige creuse conductrice interne ;
   le manchon conducteur et la tige étant reliés électriquement par soudage à un circuit imprimé du dispositif de couplage ; et le boîtier comportant une rainure externe prévue pour un collier de fixation.

Naturellement, plus le dispositif de couplage est allégé, plus sa fixation est simple. Dans un mode de réalisation, le dispositif de couplage a une masse inférieure à 50 grammes, voire 30 grammes, dans le cas notamment de coupleurs prévus pour le raccordement d'une seule ligne abonnée.

Un tel allégement est possible notamment par l'utilisation de connecteurs et d'un coupleur miniaturisés. En particulier, il convient d'employer des composants électroniques (pour le coupleur), un boîtier et des connecteurs de taille la plus réduite possible afin de réduire les dimensions et la masse du dispositif de couplage.

Grâce à la légèreté du dispositif de couplage, la question de la fixation et du maintien en position du dispositif de couplage se pose alors d'une manière tout-à-fait différente par rapport aux équipements antérieurs décrits précédemment.

Dans les harnais antérieurs, chaque fois que des connecteurs étaient intégrés au coupleur pour permettre de débrancher et rebrancher des lignes abonnées, cela entrainait l'utilisation de boîtiers métalliques relativement lourds. La masse de ces boîtiers était telle qu'elle imposait leur fixation sur la structure (sur la paroi du véhicule) sur laquelle le harnais était implanté au moyen de vis, seul moyen connu pour apporter la fiabilité de maintien requise.

Au contraire, l'allègement du dispositif de couplage permet d'envisager de nouveaux modes de maintien pour celui-ci. En particulier, l'invention rend possible de fixer le dispositif de couplage de manière très simple à l'aide d'un simple collier de fixation. Le dispositif de couplage peut être suffisamment léger pour que le dispositif de couplage puisse être fixé sans qu'il soit nécessaire d'utiliser des vis, des rivets ou tout moyen de fixation nécessitant un perçage dans la structure qui abrite la portion de câble.

On notera que dans ce document le terme 'collier de fixation' désigne de manière large toute pièce ou ensemble de pièces, souple, relativement souple, ou même rigide (à condition de pouvoir être déformée lors de la mise en place, comme on peut le faire avec une pièce comportant une charnière), utilisé(e) pour entourer plusieurs composants différents et assurer ainsi le maintien ensemble de ceux-ci - par exemple, pour assurer le maintien en position du dispositif de couplage sur les autres lignes de la portion de câble -.

Un collier de fixation peut ainsi notamment être un collier auto-bloquant, dit 'tie-wrap', un lien de type dit 'fil-fret' dans le domaine aéronautique, une bande notamment adhésive enroulée éventuellement avec plusieurs spires autour des composants à maintenir, ou encore une pièce préfabriquée adaptée à la forme extérieure de la portion de câble et clipsée sur celle-ci pour la maintenir.

Dans un mode de réalisation, la portion de câble comprend au moins une autre ligne en plus de la ligne de bus de données et de ladite au moins une ligne abonnée, et le collier de fixation maintient ensemble le dispositif de couplage et au moins une ligne parmi ladite au moins une autre ligne. Ainsi, le maintien du dispositif de couplage est assuré, entièrement ou en partie, par une ou plusieurs des autres lignes de la portion de câble. En pratique, le collier de fixation est le plus souvent entouré autour de toutes les lignes de la portion de câble, qu'il maintient ensemble en même temps que le dispositif de couplage. Comme une partie des sollicitations subies par le dispositif de couplage (accélérations, vibrations, etc.) sont reprises par la ou les autres lignes de la portion de câble, cela permet de limiter les autres moyens consacrés au maintien en position du dispositif de couplage.

Comme indiqué précédemment, le collier de fixation entoure tout ou partie des lignes de la portion de câble, et le dispositif de couplage. Cela étant, le collier de fixation peut éventuellement entourer également une pièce d'appui externe à la portion de câble : Il assure alors le maintien en position de la portion de câble sur cette pièce d'appui.

Cependant bien souvent, il suffit que le dispositif de couplage soit mécaniquement supporté uniquement par les lignes de la portion de câble, directement et/ou par l'intermédiaire d'au moins un collier de fixation. Par 'supporté directement', on signifie ici que le dispositif de couplage prend appui directement sur une ou plusieurs des lignes de la portion de câble (ligne de bus de donnée, ligne(s) abonnée(s), autres lignes éventuelles), et est ainsi en contact direct avec celles-ci, sans qu'un autre élément ne soit interposé.

On comprend que dans ce cas, le ou les colliers de fixation qui maintiennent le dispositif de couplage, maintiennent celui-ci par rapport uniquement aux autres lignes de la portion de câble. Ce ou ces colliers n'entoure(nt) pas de pièce d'appui extérieure à la portion de câble.

Ce mode de maintien du dispositif de couplage est particulièrement simple ; le dispositif de couplage avantageusement n'est maintenu en position qu'à l'aide seulement des lignes de la portion de câble, sans vis ni autre moyen de fixation intrusif par rapport à (c'est-à-dire pénétrant dans) la structure.

Dans un mode de réalisation, la portion de câble comporte en outre un support rigide, sur lequel le dispositif de couplage est fixé par au moins un collier de fixation. Le support rigide permet d'améliorer le maintien du dispositif de couplage, par rapport soit aux autres lignes de la portion de câble, et/ou par rapport à une pièce d'appui externe sur lequel s'appuie la portion de câble.

On comprend qu'en effet dans certains modes de réalisation, le dispositif de couplage est en outre appuyé et éventuellement collé (ou fixé avec du ruban adhésif, ce qui est un collage indirect) sur une pièce d'appui, externe à la portion de câble, et qui contribue au maintien en position du dispositif de couplage. Lorsque la portion de câble est montée dans un véhicule, la pièce d'appui est en général une pièce de structure du véhicule.

Un mode de réalisation de l'invention consiste ainsi en un équipement de communication comprenant une portion de câble telle que définie précédemment, et une pièce d'appui externe à la portion de câble, le dispositif de couplage étant mécaniquement supporté par appui ou collage sur ladite pièce d'appui.

Selon une variante de cet équipement de communication, la portion de câble comporte un support rigide sur lequel le dispositif de couplage est fixé par au moins un collier de fixation, le support rigide étant collé, et/ou fixé par ruban adhésif, sur la pièce d'appui.

Comme on peut le constater, dans tous les modes de réalisation présentés précédemment, la fixation du dispositif de couplage est particulièrement simple et rapide, notamment du fait qu'elle ne requiert aucun perçage ni aucune atteinte à l'intégrité du véhicule dans lequel le bus de données est implanté.

Avantageusement, la ligne de bus de données et les lignes abonnées (paire torsadée blindée), les dispositifs de couplage, les bornes de connexion permettant le raccordement de lignes abonnées aux dispositifs de couplage, et les autres accessoires (terminaisons de ligne en particulier) peuvent être distribués comme des produits « sur étagère ». Ainsi, au moment et sur le lieu du montage du réseau de bus de données, les opérateurs en charge du câblage peuvent eux-mêmes réaliser les lignes abonnées et la mise en place de celles-ci dans le réseau de bus de données.

Différents perfectionnements peuvent être apportés à la portion de câble selon l'invention.

Dans un mode de réalisation, les deux parties de la ligne de bus de données ainsi que ladite au moins une ligne abonnée se raccordent au dispositif parallèlement suivant une même direction. Cela permet de dégager les surfaces du boîtier du dispositif de couplage qui sont dirigées dans des directions perpendiculaires à la direction des lignes et forment les faces latérales du boîtier. Grâce à cela, il est possible de faire passer le collier de fixation sur ces faces pour maintenir le dispositif de couplage, ce qui évite des problèmes d'encombrement.

D'autre part, dans un mode de réalisation, le dispositif de couplage comporte un circuit imprimé, au moins un transformateur disposé sur un premier côté dudit circuit imprimé, et au moins un transformateur disposé sur un deuxième côté dudit circuit imprimé opposé au premier côté. Cet agencement permet de réduire le volume du boîtier du dispositif de couplage.

Selon un autre aspect utile à la compréhension de l'invention, les objectifs indiqués plus haut peuvent également être atteints par une portion de câble comprenant :
- deux parties d'une ligne de bus de données ;
- au moins une partie de ligne abonnée ;
- dans certains cas, au moins une autre ligne ;
- un dispositif de couplage auquel sont raccordées lesdites parties de ligne de bus de données et de ligne(s) abonnée(s) ;
   la ligne de bus de données et ladite au moins une ligne abonnée comprenant chacune une paire de conducteurs torsadés, protégés par un blindage ;
   le dispositif de couplage comprenant :
      - dans un boîtier conducteur, un coupleur assurant la transmission de données entre les deux parties de la ligne de bus de données, ainsi qu'entre la ligne de bus de données et ladite au moins une ligne abonnée ;
      - des connecteurs, solidaires du boîtier, permettant le raccordement réversible sur celui-ci des deux parties de ladite ligne de bus de données et de ladite au moins une ligne abonnée ;
   le boîtier étant électriquement relié aux blindages desdites deux parties et de ladite au moins une ligne abonnée ;
   le dispositif de couplage ayant une masse inférieure à 70 grammes et étant mécaniquement supporté uniquement par les lignes précitées, et/ou par au
   moins un collier de fixation, et/ou par appui ou collage sur au moins un élément externe au dispositif.

Naturellement dans ce dernier cas, les différents modes de réalisation indiqués précédemment, ainsi que l'intégration de la portion de câble au sein d'un équipement de communication comme présenté précédemment, sont également applicables à la portion de câble définie ci-dessus.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un réseau de bus de données dans un mode de réalisation connu, déjà décrite ;
- la figure 2 est une vue schématique en perspective d'un dispositif de couplage faisant partie d'une portion de câble selon l'invention ;
- la figure 3 est une coupe schématique du dispositif de couplage de la figure 2 ;
- la figure 4 est une vue perspective en éclaté du dispositif de couplage des figures 2 et 3 ;
- la figure 5 est un diagramme représentant le schéma électrique d'un coupleur d'un dispositif de couplage faisant partie d'une portion de câble selon l'invention ;
- la figure 6 est une vue schématique montrant une portion de câble selon l'invention dans un premier mode de réalisation ;
- la figure 7 est une vue schématique montrant une portion de câble selon l'invention dans un second mode de réalisation.

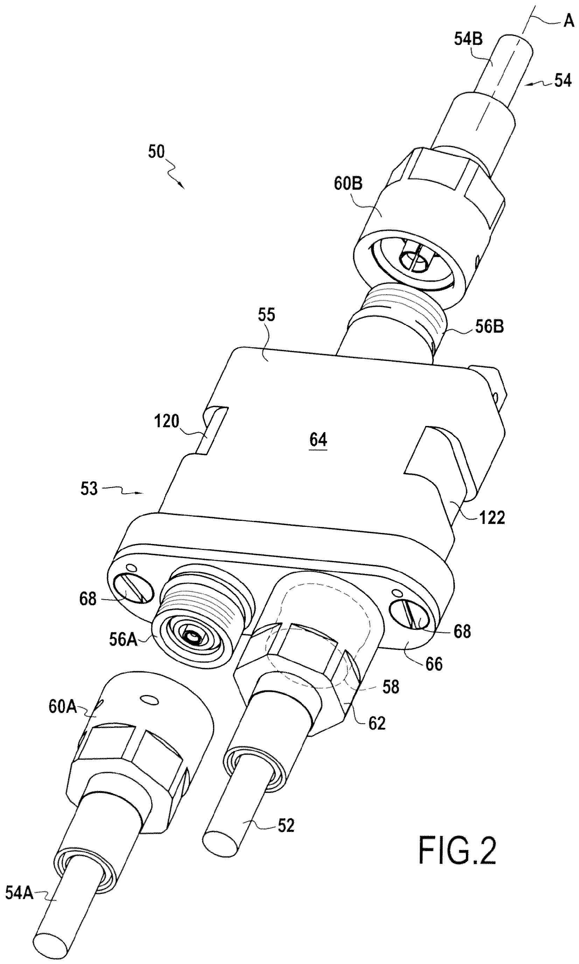

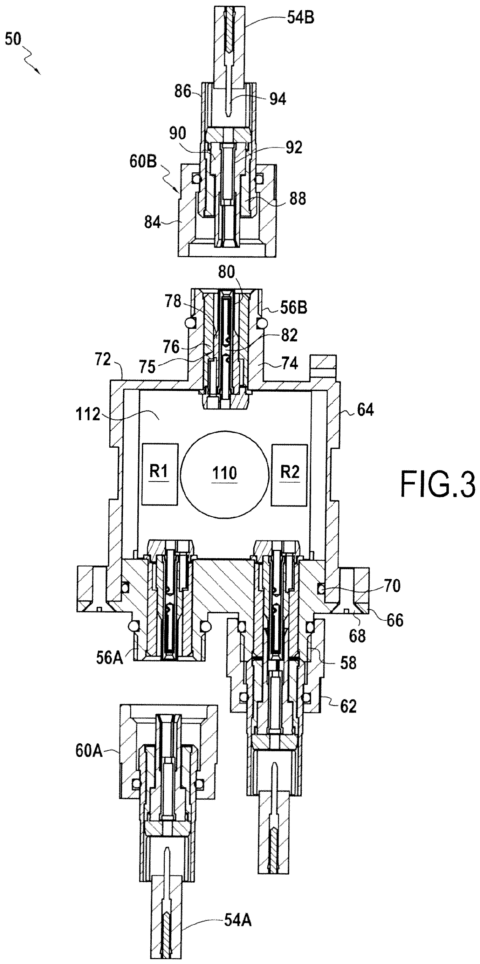

Les figures 2 et 3 présentent un dispositif de couplage 50 apte à être utilisé dans une portion de câble selon l'invention.

Ce dispositif de couplage 50 est prévu pour raccorder une ligne abonnée 52 sur une ligne 54 de bus de données. Naturellement, des dispositifs de couplage selon l'invention peuvent permettre le raccordement de plusieurs lignes abonnées (par exemple deux, trois ou quatre), et non pas une seule comme dans le cas du dispositif 50.

Le dispositif de couplage 50 comporte principalement un coupleur 53, un boîtier 55, et trois connecteurs 56A, 56B et 58.

De manière générale dans le dispositif de couplage d'une portion de câble selon l'invention, le boîtier conducteur est une boite métallique usinée, par exemple en aluminium, dans laquelle se trouvent les composants électroniques constituant le coupleur. Le boîtier est connecté électriquement avec les tresses de blindage des deux parties de la ligne de bus de données, ainsi qu'avec la ou les lignes abonnées. Les connecteurs solidaires du boîtier permettent un raccordement aisé de la ligne de bus de données et de la ou des lignes abonnées.

Aux trois connecteurs 56A, 56B et 58 correspondent trois bornes de connexion correspondantes 60A, 60B, et 62. Les bornes de connexion 60A, 60B sont fixées aux extrémités de deux parties 54A et 54B de la ligne 54 de bus de données, et la borne 62 est fixée à l'extrémité de la ligne abonnée 52.

Les connecteurs et les bornes de connexion sont des micro-connecteurs, de dimensions très réduites, ayant un diamètre extérieur inférieur à 4 mm, de l'ordre de 3 mm.

Le boîtier 55 a la forme globalement d'un parallélipipède rectangle. Il est réalisé par fonderie d'aluminium et usinage. Il est constitué par une coque 64 qui forme cinq des six faces du boîtier 55, la sixième étant constituée par un couvercle 66 occupant la dernière face. Le couvercle 66 est fixé sur la coque 64 au moyen de deux vis 68. Cet assemblage est rendu étanche par un joint 70 (figure 3). Le boîtier 55 permet d'éliminer les échanges de rayonnements entre l'intérieur et l'extérieur du boîtier, du fait notamment de la mise sous pression plan contre plan entre la coque 64 et le couvercle 66.

Le couvercle 66 intègre les deux connecteurs 56A et 58 ; du côté opposé au couvercle 66, la face 72 du boîtier 55 supporte le connecteur 56B.

Le couvercle 66 et la face 72 étant parallèles, et les connecteurs étant perpendiculaires à ces faces, les deux parties 54A et 54B de la ligne de bus de données ainsi que la ligne abonnée 52 (plus généralement, les lignes abonnées) se raccordent au dispositif parallèlement suivant une même direction. Cette direction est sensiblement celle de la ligne 54 (axe A sur la figure 2), c'est-à-dire la direction perpendiculaire au couvercle 66 et à la face 72.

Le raccordement de la ou des lignes abonnées suivant la même direction que la ligne de bus de données, sur seulement deux faces opposées 66 et 72 du boîtier 55, facilite l'intégration des lignes abonnées, de telle sorte que l'on peut constituer avec le dispositif de couplage 50 une portion de câble compacte et peu encombrante.

De plus, si une traction est exercée sur l'une des parties 54A, 54B de la ligne 54, ou sur la ligne abonnée 52, cette traction s'exerce suivant l'axe de la ligne 54 par le biais du blindage; elle se transmet donc suivant leur axe pour chacun des connecteurs 56A,56B et 58, ainsi que pour le boîtier 55. Les connecteurs ainsi que le boîtier présentent une résistance élevée à des tractions axiales, alors qu'inversement ils sont peu à même de transmettre un moment tout en maintenant une fixation étanche. Aussi, grâce au raccordement parallèle des différentes lignes sur le boîtier 55, même lorsqu'une telle traction est exercée sur la ligne de bus de données et/ou la ou les lignes abonnées, le maintien de l'étanchéité du boîtier 55 est assuré.

Comme les trois connecteurs 56A,56B et 58, ainsi que les bornes de connexion correspondantes sont sensiblement identiques, seul le connecteur 56B et la borne de connexion 60B correspondante seront décrits en détail, en relation avec la figure 3.

De l'extérieur vers l'intérieur (suivant une direction radiale), le connecteur 56B comporte un manchon cylindrique 74 formé intégralement avec le boîtier 55, et dont l'extrémité est filetée extérieurement ; un isolant externe 76 en forme de manchon ; un contact coaxial 75. Le contact coaxial 75 est constitué par un manchon sensiblement cylindrique conducteur 78, un manchon cylindrique isolant interne 80, et à l'intérieur, une tige creuse conductrice interne 82.

Le manchon conducteur 78 et la tige 82 sont reliés électriquement (par soudage) au circuit imprimé du coupleur 55, comme cela sera décrit plus loin.

De même, de l'extérieur vers l'intérieur (suivant une direction radiale), la borne de connexion 60B comporte :
- une bague de maintien conductrice 84 ;
- un manchon cylindrique conducteur externe 86 ;
- un manchon cylindrique isolant interne 88 ;
- un manchon cylindrique conducteur 90 ;
- un manchon cylindrique isolant interne 92 ;
- une tige conductrice 94.

Le manchon conducteur 90 et la tige 94 sont reliés électriquement par sertissage respectivement aux deux conducteurs 98, 99 de la paire torsadée que comprend la ligne de bus de données 54. Ces conducteurs 98, 99 de la ligne 54 transportent le signal différentiel défini par la norme MIL-STD-1553.

D'autre part, le blindage de la ligne 54 est relié par sertissage au manchon externe 86, et par suite à la bague de maintien 84.

Le montage de la borne de connexion 60B sur le connecteur 56B se fait de la manière suivante :
On approche la borne de connexion 60B du connecteur 56B de manière à engager et mettre en contact électrique respectivement le manchon externe 90 avec le manchon conducteur 78, et la tige 94 avec la tige creuse 82.
On visse alors la bague de maintien 84, ce qui met en contact électrique le blindage de la partie 54B de la ligne de bus 54 avec le boîtier 55 via le manchon 74, et assure la fixation de la partie de ligne 54B sur le boîtier 55.
On note enfin que le connecteur 56B ainsi que la borne de fixation 60B comportent des joints d'étanchéité, notamment des joints toriques ou de forme, qui permettent le raccordement étanche de la partie de ligne 54B au boîtier 55. Cela évite toute entrée d'eau dans le boîtier 55 par le connecteur 56B (et par extension, par l'ensemble des connecteurs).

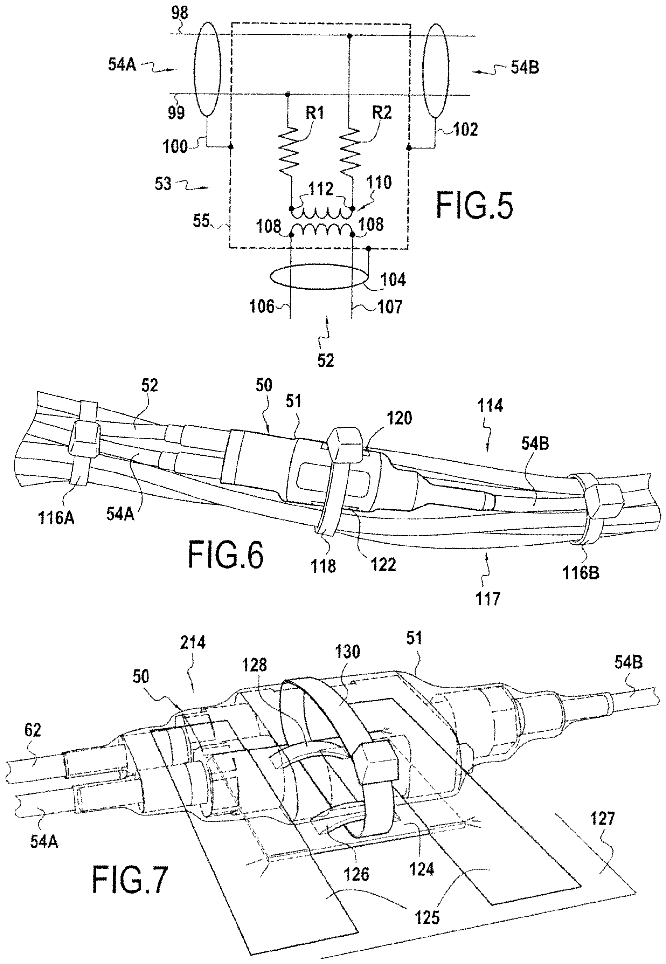

Le fonctionnement électrique du coupleur 53 est présenté par la figure 5.

Les deux conducteurs 98, 99 constituant la paire torsadée de la ligne de bus 54 sont représentés schématiquement par deux traits parallèles sur la figure 4, qui montre que les conducteurs 98, 99 sont reliés entre les connecteurs 56A et 56B par l'intermédiaire du coupleur 53.

Le boîtier conducteur 55 (en pointillé sur la figure 5) est relié par des liaisons électriques 100,102,104 avec les blindages des parties 54A et 54B de la ligne 54, et celui de la ligne abonnée 52.

Enfin, les deux conducteurs 106 et 107 de la ligne abonnée 52 sont reliés aux bornes de sortie 108 d'un transformateur de tension 110. Les bornes d'entrée 112 de celui-ci sont reliées respectivement aux conducteurs 98 et 99, via des résistances de protection R1, R2, qui assurent une protection contre les courts-circuits. Le transformateur permet de générer un signal de tension par lequel l'information est dérivée ou transmise entre la ligne de bus de données 54 et la ligne abonnée 52. La norme MIL-STD-1553B impose les valeurs des résistances R1,R2 et du transformateur de couplage 110.

Le transformateur 110 et les résistances R1 et R2 sont montés sur un circuit imprimé ou PCB 112 (figure 3). Pour chaque ligne abonnée, un dispositif de couplage selon l'invention comporte habituellement un transformateur et deux résistances. En général, ces composants (résistances, transformateur) sont montés sur un circuit imprimé. Un circuit imprimé commun peut être utilisé pour les circuits électriques nécessaires au raccordement de plusieurs lignes abonnées.

Le coupleur 53 est isolé électriquement du boîtier 55 au moyen d'une plaque isolante 115, sur laquelle est fixé le circuit imprimé 112, et qui sépare physiquement le coupleur 53 du boîtier 55.

L'ensemble des composants électriques ou électroniques disposés à l'intérieur du boîtier 55 sont des composants de dimensions très réduites. Ainsi, le boîtier (connecteur compris) a une longueur inférieure à 50 mm et une masse inférieure à 50 g (en pratique, une masse inférieure à 30g pour un boîtier pour raccorder une seule ligne abonnée).

Grâce à son poids très faible, il a pu être vérifié que le dispositif de couplage présenté est totalement conforme aux exigences de la norme MIL-STD-1553B, et notamment satisfait aux tests de vibration et tenue au choc définis par les normes EN3567 et EN2591.

Dans le cas d'un dispositif de couplage prévu pour plusieurs lignes abonnées, dans un mode de réalisation le dispositif comporte au moins un transformateur disposé sur un premier côté du circuit imprimé, et au moins un transformateur disposé sur un deuxième côté dudit circuit imprimé opposé au premier côté. (les résistances sont généralement également réparties sur les deux côtés du circuit imprimé). Cela étant, il est aussi possible de disposer les deux transformateurs du même côté du circuit imprimé.

Après avoir présenté la structure et le fonctionnement du dispositif de couplage selon l'invention, certains modes de fixation de celui-ci dans un véhicule vont maintenant être présentés.

Les figures 6 et 7 présentent une portion de câble 111 selon l'invention.

Cette portion de câble 111 comporte deux parties 54A et 54B de la ligne de bus de données 54, une partie de la ligne abonnée 52, et le dispositif de couplage 50, qui raccorde la ligne abonnée 52 à la ligne de bus de données 54. Dans cet ensemble, le dispositif 50 ainsi que les bornes de connexion de la ligne 54 et de la ligne abonnée 52 sont protégés par une gaine thermorétractable 51.

Trois modes de réalisation d'une portion de câble selon l'invention, présentant différents modes de fixation du dispositif 50 sont envisagés :
Dans un premier mode de fixation (figure 6), le dispositif de couplage 50 est fixé sur une portion de câble 114 de la manière suivante :
D'une part, la ligne 54 est fixée au faisceau de câbles 114 grâce à deux colliers de fixation 116A et 116B de type 'tie-wrap' qui enserrent conjointement la ligne 54 et les autres lignes 117 de la portion de câble. Ces colliers 116A et 116B sont disposés de part et d'autre du dispositif 50.

De plus, le dispositif 50 dans sa gaine thermorétractable est fixé sur le faisceau de câbles 114 au moyen d'un collier de fixation 118. Celui-ci s'étend dans un plan sensiblement perpendiculaire à la direction générale de la ligne 54 et du faisceau de câbles 114. Il entoure à la fois le dispositif de couplage 50 et les autres lignes 117 de la portion de câble 114.

Pour assurer le maintien en position relative du collier de fixation 118 sur le dispositif de couplage 50, le boîtier 55 comporte en outre une rainure externe - et en l'occurrence, deux rainures externes 120 et 122 - prévue(s) pour le collier de fixation 118. Avantageusement, le collier 118 passe dans ces rainures 120,122, aménagées sur la coque 64 du dispositif 50 (voir figure 2). Ces rainures assurent que le boîtier 55 ne peut se dégager du collier de fixation 118, en particulier lorsqu'il est soumis à des vibrations.

Dans un deuxième mode de réalisation, si les sollicitations mécaniques (notamment les vibrations et les accélérations) auxquelles est soumis le dispositif le permettent, le dispositif 50 est simplement fixé par les lignes (parties 54A, 54B de la ligne 54 ; ligne abonnée 62) qui lui sont raccordées - ainsi que, marginalement, par l'appui de son boîtier 55 sur les autres câbles du faisceau 114 -. Ce mode de réalisation est identique à celui qui est illustré la figure 6, sauf qu'il n'y a pas de collier de fixation 118.

Enfin, un troisième mode de réalisation d'une portion de câble 214 selon l'invention est présenté par la figure 7. Sauf mention contraire, les caractéristiques de cette portion de câble 214, et notamment de la fixation du dispositif de couplage 50, sont analogues aux caractéristiques correspondantes indiquées pour la portion de câble 114 précédemment présentée.

Dans ce mode de réalisation, dans la portion de câble 214 le dispositif 50 est fixé en utilisant un support rigide 124 additionnel. Ce support 124 est fixé au moyen de deux bandes 125 de ruban adhésif sur une paroi 127 sur laquelle on souhaite maintenir la portion de câble 214 en position fixe. Le support 124 a la forme d'une plaque carrée, comportant deux passants 126 et 128, dans lesquels on fait passer un collier 130. De manière analogue au collier 118, le collier 130 assure le maintien du dispositif de couplage 50. Cependant, dans ce mode de réalisation, le collier de fixation 130 assure la transmission des sollicitations subies par le dispositif de couplage non pas aux autres lignes de la portion de câble, mais au support 124, et à travers celui-ci à la paroi 127.

Dans ce mode de réalisation comme dans les précédents, le dispositif de couplage 50 est ainsi maintenu sans atteinte à l'intégrité de la structure dans laquelle la portion de câble est intégrée.

Les modes de réalisation présentés comportent un dispositif de couplage 50 prévu pour le raccordement d'une seule ligne abonnée. Naturellement, un dispositif de couplage selon l'invention peut être réalisé de manière à permettre le raccordement de plusieurs lignes abonnées. Dans ce cas, il convient de prévoir notamment un circuit imprimé apte à accueillir en parallèle un ou plusieurs circuits supplémentaires similaires à celui illustré par la figure 5, et un ou plusieurs connecteurs supplémentaires identiques au connecteur 60, reliés au(x) circuit(s) supplémentaire(s). Le boîtier est adapté en conséquence.

## Revendications

1. Portion de câble (114,214) comprenant :
- deux parties (54A, 54B) d'une ligne (54) de bus de données ;
- au moins une partie de ligne abonnée (52) ;
- un dispositif de couplage auquel sont raccordées lesdites parties de ligne de bus de données et de ligne(s) abonnée(s) ;
la ligne de bus de données et ladite au moins une ligne abonnée comprenant chacune une paire de conducteurs torsadés, protégés par un blindage ;
le dispositif de couplage comprenant :
- dans un boîtier conducteur (55), un coupleur (53) assurant la transmission de données entre les deux parties de la ligne de bus de données, ainsi qu'entre la ligne de bus de données et ladite au moins une ligne abonnée ;
- des connecteurs (56A,56B,58), solidaires du boîtier, permettant le raccordement réversible sur celui-ci des deux parties de ladite ligne de bus de données et de ladite au moins une ligne abonnée ;
le boîtier étant électriquement relié aux blindages desdites deux parties et de ladite au moins une ligne abonnée ;
la portion de câble **se caractérisant en ce que**
de l'extérieur vers l'intérieur suivant une direction radiale, chacun des connecteurs (56A,56B,58) comporte un manchon cylindrique (74) formé intégralement avec le boîtier conducteur, un isolant externe (76) en forme de manchon, et un contact coaxial (75) ;
le contact coaxial (75) est constitué par un manchon sensiblement cylindrique conducteur (78), un manchon cylindrique isolant interne (80), et à l'intérieur, une tige creuse conductrice interne (82) ;
le manchon conducteur (78) et la tige (82) sont reliés électriquement par soudage à un circuit imprimé du dispositif de couplage (55) ; et
le boîtier comporte une rainure externe (120,122) prévue pour un collier de fixation (118,130).

2. Portion de câble (114,214) selon la revendication 1, comprenant au moins une autre ligne en plus de la ligne de bus de données et de ladite au moins une ligne abonnée, et dans laquelle le collier de fixation maintient ensemble le dispositif de couplage et au moins une ligne parmi ladite au moins une autre ligne.

3. Portion de câble (114,214) selon la revendication 1 ou 2, dans laquelle le dispositif de couplage a une masse inférieure à 70 grammes, voire à 50 grammes.

4. Portion de câble (114,214) selon l'une quelconque des revendications 1 à 3, dans lequel les deux parties (54A,54B) de la ligne de bus de données ainsi que ladite au moins une ligne abonnée (52) se raccordent au dispositif parallèlement suivant une même direction.

5. Portion de câble (114,214) selon l'une quelconque des revendications 1 à 4, dans laquelle le dispositif de couplage comporte en outre un circuit imprimé (112), au moins un transformateur (110) disposé sur un premier côté dudit circuit imprimé, et au moins un transformateur disposé sur un deuxième côté dudit circuit imprimé opposé au premier côté.

6. Portion de câble (214) selon l'une quelconque des revendications 1 à 5, comportant en outre un support rigide (124), sur lequel le dispositif de couplage est fixé par au moins un collier de fixation (130).

7. Portion de câble (114) selon l'une des revendications 1 à 6, dans laquelle le dispositif de couplage est mécaniquement supporté uniquement par les lignes précitées, directement et/ou par l'intermédiaire d'au moins un collier de fixation (118,130).

8. Équipement de communication comprenant une portion de câble (114,214) selon l'une quelconque des revendications 1 à 6, et une pièce d'appui (127) externe à la portion de câble, le dispositif de couplage étant mécaniquement supporté par appui ou collage sur ladite pièce d'appui.

9. Èquipement de communication selon la revendication 8, dans lequel la portion de câble comporte un support rigide (124) sur lequel le dispositif de couplage est fixé par au moins un collier de fixation (130), le support rigide étant collé, et/ou fixé par ruban adhésif, sur la pièce d'appui.

## Patentansprüche

1. Kabelabschnitt (114, 214), umfassend:
- zwei Teile (54A, 54B) einer Datenbusleitung (54),
- wenigstens einen Teilnehmerleitungsteil (52),
- eine Kopplungsvorrichtung, an die die Teile der Datenbusleitung und der Teilnehmerleitung(en) angeschlossen sind,
wobei die Datenbusleitung und die wenigstens eine Teilnehmerleitung jeweils ein Paar verdrillter Leiter umfassen, die durch eine Abschirmung geschützt sind,
wobei die Kopplungsvorrichtung umfasst:
- in einem leitenden Gehäuse (55) einen Koppler (53), der die Datenübertragung zwischen den beiden Teilen der Datenbusleitung sowie zwischen der Datenbusleitung und der wenigstens einen Teilnehmerleitung sicherstellt,
- Verbinder (56A, 56B, 58), die mit dem Gehäuse fest verbunden sind und die umkehrbare Verbindung der beiden Teile der Datenbusleitung und der wenigstens einen Teilnehmerleitung daran ermöglichen,
wobei das Gehäuse mit den Abschirmungen der beiden Teile und der wenigstens einen Teilnehmerleitung elektrisch verbunden ist,
wobei der Kabelabschnitt **dadurch gekennzeichnet ist, dass**
ein jeder der Verbinder (56A, 56B, 58) von außen nach innen in einer radialen Richtung eine zylindrische Hülse (74), welche einstückig mit dem leitenden Gehäuse ausgebildet ist, einen äußeren Isolator (76) in Form einer Hülse, und einen koaxialen Kontakt (75) umfasst,
der koaxiale Kontakt (75) aus einer leitenden, im Wesentlichen zylindrischen Hülse (78), einer inneren, isolierenden, zylindrischen Hülse (80) sowie im Inneren aus einem inneren, leitenden, hohlen Stift (82) besteht,
die leitende Hülse (78) und der Stift (82) durch Löten mit einer gedruckten Schaltung der Kopplungsvorrichtung (55) elektrisch verbunden sind, und
das Gehäuse eine äußere Nut (120,122) aufweist, die für eine Befestigungsschelle (118,130) vorgesehen ist.

2. Kabelabschnitt (114, 214) nach Anspruch 1, der wenigstens eine weitere Leitung zusätzlich zu der Datenbusleitung und der wenigstens einen Teilnehmerleitung umfasst und bei dem die Befestigungsschelle die Kopplungsvorrichtung und wenigstens eine Leitung aus der wenigstens einen weiteren Leitung zusammenhält.

3. Kabelabschnitt (114, 214) nach Anspruch 1 oder 2, bei dem die Kopplungsvorrichtung eine Masse von weniger als 70 Gramm, ja sogar 50 Gramm aufweist.

4. Kabelabschnitt (114, 214) nach einem der Ansprüche 1 bis 3, bei dem die beiden Teile (54A, 54B) der Datenbusleitung sowie die wenigstens eine Teilnehmerleitung (52) parallel in derselben Richtung an die Vorrichtung angeschlossen sind.

5. Kabelabschnitt (114, 214) nach einem der Ansprüche 1 bis 4, bei dem die Kopplungsvorrichtung ferner eine gedruckte Schaltung (112), wenigstens einen Transformator (110), der auf einer ersten Seite der gedruckten Schaltung angeordnet ist, und wenigstens einen Transformator, der auf einer der ersten Seite gegenüberliegenden zweiten Seite der gedruckten Schaltung angeordnet ist, umfasst.

6. Kabelabschnitt (214) nach einem der Ansprüche 1 bis 5, der ferner einen starren Träger (124) umfasst, an dem die Kopplungsvorrichtung durch wenigstens eine Befestigungsschelle (130) befestigt ist.

7. Kabelabschnitt (114) nach einem der Ansprüche 1 bis 6, bei dem die Kopplungsvorrichtung lediglich durch die vorgenannten Leitungen, direkt und/oder über wenigstens eine Befestigungsschelle (118, 130) mechanisch gehalten wird.

8. Kommunikationseinrichtung, umfassend einen Kabelabschnitt (114, 214) nach einem der Ansprüche 1 bis 6 und ein Stützteil (127) außerhalb des Kabelabschnitts, wobei die Kopplungsvorrichtung mechanisch durch Stützen oder Kleben an dem Stützteil gehalten wird.

9. Kommunikationseinrichtung nach Anspruch 8, bei der der Kabelabschnitt einen starren Träger (124) umfasst, an dem die Kopplungsvorrichtung durch wenigstens eine Befestigungsschelle (130) befestigt ist, wobei der starre Träger an dem Stützteil festgeklebt und/oder mittels Klebestreifen befestigt ist.

## Claims

1. A cable portion (114, 214) comprising:
• two parts (54A, 54B) of a databus line (54);
• at least one subscriber line part (52);
• a coupler device to which said databus line and subscriber line(s) parts are connected;
the databus line and the at least one subscriber line each comprising a twisted pair of conductors, protected by shielding;
the coupler device comprising:
• in a conductive housing (55), a coupler (53) for transmitting data between the two parts of the databus line, and also between the databus line and said at least one subscriber line;
• connectors (56A, 56B, 58), secured to the housing, enabling the two parts of said databus line and said at least one subscriber line to be reversibly connected thereto;
the housing being electrically connected to the shielding of said two parts and of said at least one subscriber line;
the cable portion being **characterized in that** from the outside toward the inside along a radial direction, each of the connectors (56A,56B,58) comprises a cylindrical sleeve (74) made integrally with the conductive housing, a sleeve-shaped external insulator (76), and a coaxial contact (75);
the coaxial contact (75) is constituted by a conductive substantially cylindrical sleeve (78), an inner insulating cylindrical sleeve (80), and inside, an inner conductive hollow rod (82);
the conductive sleeve (78) and the rod (82) are electrically connected by soldering to a printed circuit of the coupler device (55); and
the housing comprises an outer groove (120,122) provided for receiving a fastener collar (118, 130).

2. A cable portion (114, 214) according to claim 1, having at least one other line in addition to the databus line and said at least one subscriber line, and wherein the fastener collar holds together the coupler device and at least one line from said at least one other line.

3. A cable portion (114, 214) according to claim 1 or claim 2, wherein the coupler device weighs less than 70g, or even than 50 g.

4. A cable portion (114, 214) according to any one of claims 1 to 3, wherein the two parts (54A, 54B) of the databus line and said at least one subscriber line (52) are connected to the device in parallel with a common direction.

5. A cable portion (114, 214) according to any one of claims 1 to 4, wherein the coupler device further includes a printed circuit (112), at least one transformer (110) arranged on a first side of said printed circuit, and at least one transformer arranged on a second side of said printed circuit, opposite from the first side.

6. A cable portion (214) according to any one of claims 1 to 5, further including a rigid support (124) on which the coupler device is fastened by at least one fastener collar (130).

7. A cable portion (114) according to any one of claims 1 to 6, wherein the coupler device is mechanically supported solely by the above-mentioned lines, directly and/or via at least one fastener collar (118, 130).

8. Communications equipment including a cable portion (114, 214) according to any one of claims 1 to 6 and a support piece (127) external to the cable portion, the coupler device being mechanically supported by bearing against said support piece or by being adhesively bonded thereto.

9. Communications equipment according to claim 8, wherein the cable portion includes a rigid support (124) to which the coupler device is fastened by at least one fastener collar (130), the rigid support being fastened to the support piece by adhesive bonding and/or by adhesive tape.
